(19) Europäisches Patentamt
European Patent Office
Office européen des brevets

(11) **EP 3 889 858 A1**

(12) **EUROPEAN PATENT APPLICATION**

(43) Date of publication:
**06.10.2021 Bulletin 2021/40**

(51) Int Cl.:
***G06Q 10/06*** *(2012.01)*      ***G06Q 10/10*** *(2012.01)*

(21) Application number: **20167903.2**

(22) Date of filing: **03.04.2020**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Koninklijke Philips N.V.**
**5656 AG Eindhoven (NL)**

(72) Inventors:
• **C S, Vidya**
  **5656 AE Eindhoven (NL)**
• **BORA, Revoti Prasad**
  **5656 AE Eindhoven (NL)**

(74) Representative: **Philips Intellectual Property & Standards**
**High Tech Campus 5**
**5656 AE Eindhoven (NL)**

(54) **METHOD AND SYSTEM FOR GENERATING DOMAIN COMPLIANT MODEL**

(57) The present invention relates to a method of evaluating a model (101A) for compliance, the method includes obtaining one or more threshold values, one or more rules, and one or more domain constraints for each of the one or more constraints associated with the model (101A), where the one or more constraints includes a thin-boundary constraint. Further, for each of the one or more constraints, the method includes comparing the one or more rules with the one or more domain constraints. Furthermore, the method includes determining a score associated with each of the one or more rules based on result of the comparison. Thereafter, the method includes determining an aggregated score based on the score. Finally, the method includes evaluating the compliance of the model (101A) to a domain, based on the aggregated score and the one or more threshold values.

FIGURE 3

**Description**

FIELD OF THE INVENTION

The present disclosure relates to verification and validation of learning models. Particularly, but not exclusively, the present disclosure relates to a method of generating a domain compliant model.

BACKGROUND OF THE INVENTION

Recently, there has been an increasing trend in the use of machine learning models for performing various predictive tasks. For example, a recommender system for suggesting one or more products to a consumer in an e-commerce application. The machine learning models are often used to quantify a global, semantically meaningful relationship between two or more values. For example, a hotel chain might want to use the machine learning model to optimize the pricing strategy and use the machine learning model to estimate the likelihood of a room being booked at a given price and day of the week. However, the machine learning model upon training may predict for example, "On Tuesdays, clients are willing to pay $110 than $100 for a room". The existing technique as disclosed in WO2018084867A1 generates a neural network model for determining a relationship between each predictor variable and a risk indicator. The system performs a factor analysis on the predictor variables to determine common factors. The neural network model is iteratively adjusted so that (i) a monotonic relationship exists between each common factor and the risk indicator and (ii) a respective variance inflation factor for each common factor is sufficiently low. In another existing technique as disclosed in US20160364511A1 generates monotonicity constraints and integrates the monotonicity constraints with an additive tree model.

The machine learning models have evolved into complex and black-box models. Also, the machine learning models are data-driven and are prone to learn artificial relationships between one or more input variables. Hence, the machine learning models may not be explainable or actionable. Therefore, there is a need for interpreting the machine learning models to assert the compliance of the model to a domain.

The information disclosed in this background of the disclosure section is only for enhancement of understanding of the general background of the invention and should not be taken as an acknowledgment or any form of suggestion that this information forms the prior art already known to a person skilled in the art.

SUMMARY OF THE INVENTION

Additional features and advantages are realized through the techniques of the present disclosure. Other embodiments and aspects of the disclosure are described in detail herein and are considered a part of the claimed disclosure.

Disclosed herein is a method of evaluating a model for compliance, the method includes obtaining one or more threshold values, one or more rules, and one or more domain constraints for each of the one or more constraints associated with the model, where the one or more constraints includes a thin-boundary constraint. Further, for each of the one or more constraints, the method includes comparing the one or more rules with the one or more domain constraints. Furthermore, the method includes determining a score associated with each of the one or more rules based on result of the comparison. Thereafter, the method includes determining an aggregated score based on the score associated with each of the one or more rules. Finally, the method includes evaluating the compliance of the model to a domain, based on the aggregated score and the one or more threshold values.

Embodiments of the present disclosure discloses a computing system, for evaluating a model for compliance, the computing system including a processor, and a memory communicatively coupled to the processor, wherein the memory stores the processor-executable instructions, which, on execution, causes the processor to obtain one or more threshold values, one or more rules, and one or more domain constraints for each of the one or more constraints associated with the model, wherein the one or more constraints includes a thin-boundary constraint. Further, for each of the one or more constraints, the processor is configured to compare the one or more rules with the one or more domain constraints. Furthermore, the processor is configured to determine a score associated with each of the one or more rules based on result of the comparison. Thereafter, the processor is configured to determine an aggregated score based on the score associated with each of the one or more rules. Finally, the processor is configured to evaluate the compliance of the model to a domain based on the aggregated score and the one or more threshold values.

The foregoing summary is illustrative only and is not intended to be in any way limiting. In addition to the illustrative aspects, embodiments, and features described above, further aspects, embodiments, and features may become apparent by reference to the drawings and the following detailed description.

BRIEF DESCRIPTION OF THE DRAWINGS

The novel features and characteristics of the disclosure are set forth in the appended claims. The disclosure itself, however, as well as a preferred mode of use, further objectives and advantages thereof, may best be understood by reference to the following detailed description of an illustrative embodiment when read in conjunction with the accompanying drawings. The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. One or more embodiments are now described, by way of example only, with reference to the accompanying figures wherein like reference numerals represent like elements and in which:

FIGURE 1 shows an exemplary environment for determining a domain compliant model, in accordance with some embodiments of the present disclosure;

FIGURE 2 shows a detailed block diagram of a computing system, for evaluating a model for compliance, in accordance with some embodiments of the present disclosure;

FIGURE 3 shows a flowchart illustrating method steps of evaluating the model for compliance, in accordance with some embodiment of the present disclosure;

FIGURE 4A shows an exemplary variation of a monotonicity constraint with increasing trend between the one or more input variables and the output of the model, in accordance with some embodiments of the present disclosure;

FIGURE 4B shows an exemplary thin-boundary constraint having a variation within a range of values, in accordance with some embodiments of the present disclosure;

FIGURE 4C shows an exemplary dataset with a plurality of datapoints, in accordance with some embodiments of the present disclosure;

FIGURE 4D and FIGURE 4H show an exemplary model trained using the dataset, in accordance with some embodiments of the present disclosure;

FIGURE 4E shows an exemplary one or more thresholds, one or more rules, and one or more domain constraints obtained by the computing system, in accordance with some embodiments of the present disclosure;

FIGURE 4F shows an exemplary determination of a score for the one or more rules, in accordance with some embodiments of the present disclosure;

FIGURE 4G shows an exemplary determination of an aggregated score for a model, in accordance with some embodiments of the present disclosure;

FIGURE 4I and FIGURE 4J show an exemplary variation learned by a model for evaluating the monotonicity constraint, in accordance with some embodiments of the present disclosure;

FIGURE 4K and FIGURE 4L show an exemplary variation learned by a model for evaluating the thin-boundary constraint, in accordance with some embodiments of the present disclosure;

FIGURE 4M shows an exemplary determination of a domain compliant model, in accordance with some embodiments of the present disclosure; and

FIGURE 5 shows an exemplary computer system for evaluating the compliance of a model, in accordance with some embodiments of the present disclosure.

It should be appreciated by those skilled in the art that any block diagrams herein represent conceptual views of illustrative systems embodying the principles of the present subject matter. Similarly, it may be appreciated that any flow charts, flow diagrams, state transition diagrams, pseudo code, and the like represent various processes which may be substantially represented in computer-readable medium and executed by a computer or processor, whether or not such computer or processor is explicitly shown.

DETAILED DESCRIPTION OF EMBODIMENTS

In the present document, the word "exemplary" is used herein to mean "serving as an example, instance, or illustration." Any embodiment or implementation of the present subject matter described herein as "exemplary" is not necessarily to be construed as preferred or advantageous over other embodiments.

While the disclosure is susceptible to various modifications and alternative forms, specific embodiment thereof has been shown by way of example in the drawings and may be described in detail below. It should be understood, however that it is not intended to limit the disclosure to the particular forms disclosed, but on the contrary, the disclosure is to cover all modifications, equivalents, and alternative falling within the scope of the disclosure.

The terms "comprises", "includes" "comprising", "including" or any other variations thereof, are intended to cover a non-exclusive inclusion, such that a setup, device or method that comprises a list of components or steps does not include only those components or steps but may include other components or steps not expressly listed or inherent to such setup or device or method. In other words, one or more elements in a system or apparatus proceeded by "comprises... a" or "includes... a" does not, without more constraints, preclude the existence of other elements or additional elements in the system or apparatus.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

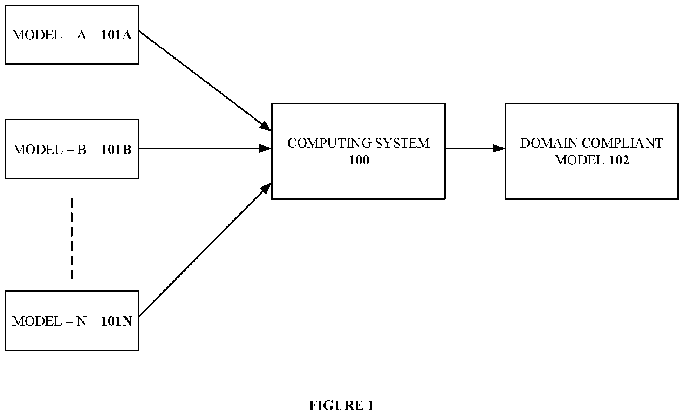

**FIGURE 1** shows an exemplary environment for determining a domain compliant model (102), in accordance with some embodiments of the present disclosure.

The present disclosure relates to a method of evaluating a model for compliance. The model herein refers to one or more machine learning models, for example, a decision tree, a regression model and the like. In an embodiment, a user may want to choose a domain compliant model (102) from a plurality of models (101A, 101B, ... 101N) for performing one or more actions. For example, the actions may include predictive tasks, recognition tasks, classification tasks and the like. The plurality of models (101A, 101B, ... 101N) is pre-trained by the user for performing the one or more actions. The user may select the domain compliant model (102) based on a compliance score and an accuracy associated with the plurality of models (101A, 101B, ... 101N). The compliance score of each model (for example, 101A) from the plurality of models (101A, 101B, ... 101N) is determined by a computing system (100). The computing system (100) may be deployed in a server for evaluating a model (101A) for compliance and for determining the compliance score. The computing system (100) obtains one or more threshold values, one or more rules, and one or more domain constraints for each of the one or more constraints associated with the model (101A). The one or more constraints includes at least one of a thin-boundary constraint and a monotonicity constraint. The monotonicity constraint is indicative of an increasing trend or a decreasing trend between an input to the model (101A) and an output of the model (101A). For example, with an increase in the amount of available RAM in a computer, the processing speed of applications increases. The thin-boundary constraint is indicative of a range of values in the input to the model (101A) for an expected output from the model (101A). For example, navigating a vehicle within a speed range of 40 km/h to 60 km/h consumes less fuel and navigating the vehicle with a speed less than 40 km/h and the speed greater than 60 km/h consumes more fuel. The one or more threshold values include at least a predefined compliance score for evaluating a model (101A) for compliance. The one or more rules associated with the model (101A) are indicative of a relationship between one or more input variables and the output of the model (101A) or one or more range of values taken by the one or more input variables. For example, the one or more rules is "Random Access Memory (RAM) > 75%" causes "delay in processing", where the "RAM" is the one or more input variables, "75" is the value associated with the "RAM", "delay" is the output of the model (101A) and the values from "0 to 100" is one or more range of values taken by the "RAM". The one or more rules are extracted from the model (101A) after training the model (101A). Further, the one or more domain constraints are compliant to the one or more rules, where the one or more domain constraints are determined by the user based on the domain knowledge.

In an embodiment, the computing system (100) for each of the one or more constraints compares the one or more rules with the one or more domain constraints. Further, the computing system (100) determines an aggregated score indicative of a compliance score based on a result of the comparison. The phrase "aggregated score" and the phrase "compliance score" is used interchangeably in the present disclosure. The aggregated score is higher when the one or more rules learned by the model (101A) are compliant to the one or more domain constraints provided by the user. Alternatively, the aggregated score is lower when the one or more rules learned by the model (101A) are not compliant to the one or more domain constraints provided by the user. For example, when the model (101A) learns "RAM usage > 80%" causes "a processing delay" and the one or more domain constraints provided by the user indicate "Increased RAM usage" causes "a processing delay" the aggregated score may be higher. In another example, when the model (101A) learns "RAM usage > 50%" causes "a processing delay" and the one or more domain constraints provided by the user indicate "Increased RAM usage" causes "a processing delay" the aggregated score may be lower. Further, the aggregated score is compared with the predefined compliance score to determine the compliance of the model (101A). For example, if the aggregated score is 70 and the predefined compliance score is 75, the model (101A) is rejected and the model (101A) may be trained further. In another example, if the aggregated score is 78 and the predefined compliance score is 75, the model (101A) is accepted to be compliant and is used for performing the one or more actions.

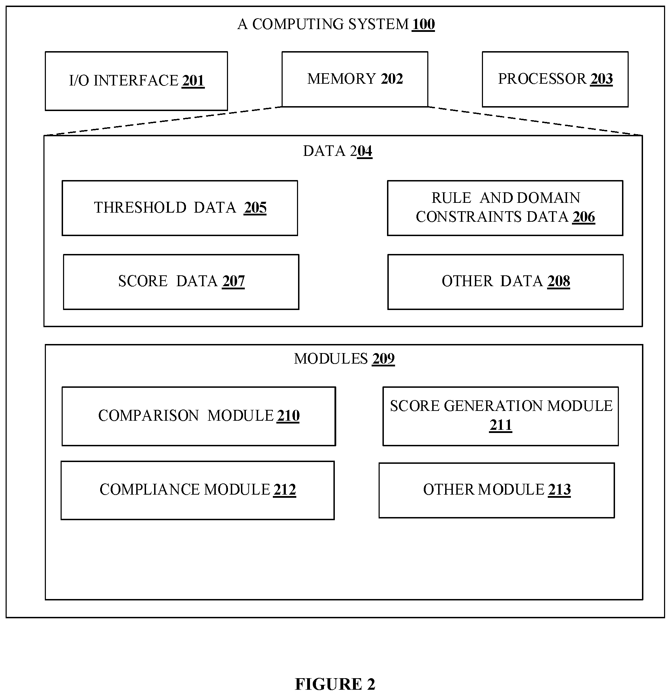

**FIGURE 2** shows a detailed block diagram of a computing system (100), for evaluating a model (101A) for compliance, in accordance with some embodiments of the present disclosure.

The computing system (100) may include a Central Processing Unit ("CPU" or "processor") (203) and a memory (202) storing instructions executable by the processor (203). The processor (203) may include at least one data processor for executing program components for executing user or system-generated requests. The memory (202) may be communicatively coupled to the processor (203). The computing system (100) further includes an Input/ Output (I/O) interface (201). The I/O interface (201) may be coupled with the processor (203) through which an input signal or/and an output signal may be communicated. In one embodiment, the computing system (100) may receive the one or more threshold values, the one or more rules, and the one or more domain constraints through the I/O interface (201).

In some implementations, the computing system (100) may include data (204) and modules (209) as shown in **FIGURE 2**. As an example, the data (204) and modules (209) may be stored in the memory (202) configured in the computing system (100). In one embodiment, the data (204) may include, for example, a threshold data (205), a rule and domain constraint data (206), a score data (207) and other data (208). In the illustrated **FIGURE 2**, data (204) are described herein in detail.

In an embodiment, the threshold data (205) includes at least one of a probability of occurrence associated with the one or more rules, an accuracy associated with the model (101A), and a predefined compliance score. The probability of occurrence is indicative of usage of the one or more rules by the model (101A) to predict the output for a given input. For example, given a model (101A) with three rules i.e. Rule - 1, Rule - 2 and Rule - 3, the probability associated with the Rule - 1 is 0.7, the probability associated with the Rule - 2 is 0.25, and the probability associated with the Rule - 3 is 0.05 is indicative that Rule - 1 is used to predict the output for 70% of the inputs to the model (101A), Rule - 2 is used to predict the output for 25% of the inputs to the model (101A) and the Rule - 3 is used to predict the output for 5% of the inputs to the model (101A). The accuracy is indicative of the success rate of predicting a correct output. In an embodiment the accuracy may be indicative of a at least one of an Fi-Score, recall score and the like. For example, the accuracy 82% associated with the model (101A) indicates the predicted output is correct for 82 inputs out of 100 inputs and the predicted output is incorrect for 18 inputs out of 100 inputs. The predefined compliance score is indicative of the expected aggregated score from the user for using the model (101A) to perform the one or more actions. For example, the predefined compliance score of 75% indicates the model (101A) having the aggregated score less than 75% is rejected and the model (101A) having the aggregated score greater than 75% is accepted.

In an embodiment, the rule and domain constraint data (206) includes the one or more rules and the one or more domain constraints the one or more rules and the one or more domain constraints includes a relationship between one or more input variables associated with the model (101A) and one or more range of values or the expected output from the model (101A). For example, the one or more rules and the one or more domain constraints may be $x_1 > 7.4$, $2.3 < x_2 < 5$, $x_3 < 15$, where $x_1$, $x_2$, and $x_3$ indicates the input variables to the model (101A) or features learned by the model (101A).

In an embodiment, the score data (207) includes a score associated with each of the one or more rules and the aggregated score associated with the model (101A). The score is a binary value associated with each of the one or more rules. For example, a binary value of 1 is associated to each of the one or more rules when the one or more rules is compliant to the one or more domain constraints and a binary value of 0 is associated to each of the one or more rules when the one or more rules is not compliant to the one or more domain constraints. Further, the aggregated score is a weighted sum of the score associated with each of the one or more rules indicative of compliance of the model (101A).

In an embodiment, the other data (208) may include one or more input variables, the output of the model (101A), a predefined accuracy associated with the model (101A) and the like.

In some embodiments, the data (204) may be stored in the memory (202) in the form of various data structures. Additionally, the data (204) may be organized using data models, such as relational or hierarchical data models. The other data (208) may store data, including temporary data and temporary files, generated by the modules (209) for performing the various functions of the computing system (100).

In some embodiments, the data (204) stored in the memory (202) may be processed by the modules (209) of the computing system (100). The modules (209) may be stored within the memory (202), communicatively coupled to the processor (203) and may be present outside the memory (202) as shown in **FIGURE 2**. As used herein, the term modules (209) may refer to an Application Specific Integrated Circuit (ASIC), a Field Programmable Gate Array (FPGA), an electronic circuit, a processor (203) (shared, dedicated, or group) and the memory (202) that execute one or more software or firmware programs, a combinational logic circuit, and/or other suitable components that provide the described functionality. In some other embodiments, the modules (209) may be implemented using at least one of ASICs and FPGAs.

In one implementation, the modules (209) may include, for example, a comparison module (210), a score generation module (211), a compliance module (212), and other module (213). It may be appreciated that such the aforementioned modules (209) may be represented as a single module or a combination of different modules.

In an embodiment, the comparison module (210) is used for comparing the one or more rules with the one or more domain constraints for each of the one or more constraints. Further, when the one or more constraints is a monotonicity constraint, the comparison module (210) verifies a variation comprising at least one of a decreasing trend and an increasing trend, of one or more input variables in each of the one or more rules with a corresponding variation in each of the one or more domain constraints. For example, if the one or more domain constraints indicates, as the "Number of processor threads" increases, a delay in processing applications increases, the comparison module (210) verifies if the model (101A) has learned the one or more rules indicating the increase in delay with the increase in "Number of processor threads". Furthermore, when the one or more constraints is the thin-boundary constraint the comparison module (210) verifies a variation comprising one or more range of values for one or more input variables in each of the one or more rules with corresponding variation in each of the one or more domain constraints. For example, if the one or more domain constraints indicate a speed range of 20km/h for navigating the vehicle for better fuel efficiency, the comparison module (210) verifies if the model (101A) has learned the one or more rules indicating the speed range of 20km/h.

In an embodiment, the score generation module (211) is used for determining score associated with each of the one or more rules based on a result of the comparison of the one or more rules with the one or more domain constraints. The score is determined by associating a binary value for each of the one or more rules based on the result of the comparison. For example, a binary value of 1 is associated to the each of the one or more rules when the one or more rules is compliant to the one or more domain constraints and a binary value of 0 is associated to the each of the one or more rules when the one or more rules is not compliant to the one or more domain constraints. Further, the score generation module (211) is used for determining the aggregated score based on the score associated with each of the one or more rules. For each constraint, a weighted sum is computed based on the determined score and a probability of occurrence associated with each of the one or more rules using the equation 1:

$$Wi = \sum_{k=0}^{n} Sk * Pk \ \dots\dots\dots\dots\dots\dots\dots\dots\dots\dots\dots\dots\dots\dots\dots\dots\dots\dots\dots \ (1)$$

where $Wi$ is the weighted sum of the $i^{th}$ constraint, $Sk$ is the score associated with the $k^{th}$ rule, $Pk$ is the probability of occurrence of the $k^{th}$ rule and n indicates a count of the one or more rules for the $i^{th}$ constraint. Further, the aggregated score is computed as a product of the weighted sum associated with the one or more constraints using the equation 2:

$$Ai = \prod_{k=0}^{m} Wi \ \dots\dots\dots\dots\dots\dots\dots\dots\dots\dots\dots\dots\dots\dots\dots\dots\dots\dots\dots\dots \ (2)$$

where $Ai$ indicates the aggregates score for the $i^{th}$ model and m indicates a count of the one or more constraints associated with the model (101A). For example, for the monotonicity constraint, let the score associated with the Rule - 1, Rule - 2 and Rule - 3 be 1, 0, 1 respectively and the probability of occurrence of the Rule - 1, Rule - 2 and Rule - 3 be 0.6, 0.3, 0.1 respectively. For the thin-boundary constraint, let the score associated with the Rule - 1, and Rule - 2 be 0, 1 respectively and the probability of occurrence of the Rule - 1, and Rule - 2 be 0.8, and 0.2 respectively. The weighted sum for the monotonicity constraint (i.e. W1) and the thin-boundary constraint (W2) computed using the equation (1) is 0.7 and 0.2 respectively. The aggregated score for the model (101A) computed using the equation (2) is 0.14 or 14 (when normalized over 0 to 100).

In an embodiment, the compliance module (212) is used to evaluate the compliance of the model (101A) to a domain, based on the aggregated score and the one or more threshold values. The compliance of the model (101A) is evaluated by comparing the aggregated score with the predefined compliance score when the accuracy associated with the model (101A) is greater than or equal to a predefined accuracy threshold. For example, the model (101A) with the aggregated score of 60.5 and the predefined compliance score of 83 is not domain compliant and the model (101A) with the aggregated score of 74.2 and the predefined compliance score of 71 is domain compliant.

In an embodiment, the other module (213) is used to extract the one or more rules from the model (101A) based on at least one of a decision tree technique, and a local interpretable model-agnostic explanations technique and the like.

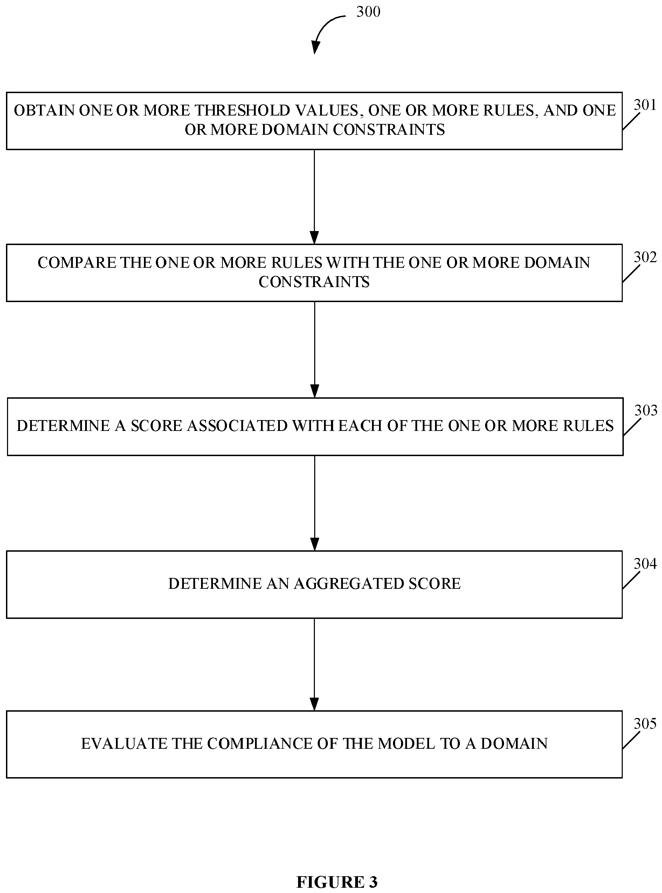

**FIGURE 3** shows a flowchart illustrating the method steps of evaluating the model (101A) for compliance, in accordance with some embodiment of the present disclosure.

The order in which the method 300 may be described is not intended to be construed as a limitation, and any number of the described method blocks may be combined in any order to implement the method. Additionally, individual blocks may be deleted from the methods without departing from the scope of the subject matter described herein. Furthermore, the method may be implemented in any suitable hardware, software, firmware, or combination thereof.

At operation 301, the computing system (100), obtains the one or more threshold values, the one or more rules, and the one or more domain constraints for each of the one or more constraints associated with the model (101A), where the one or more constraints includes a thin-boundary constraint.

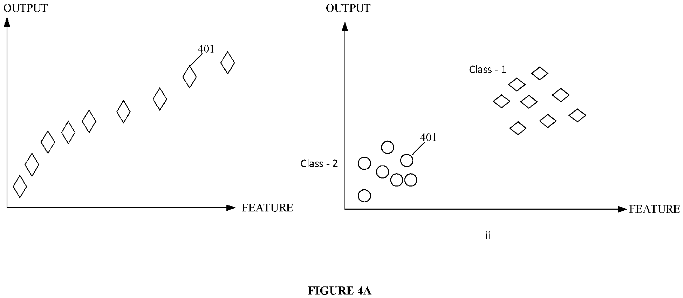

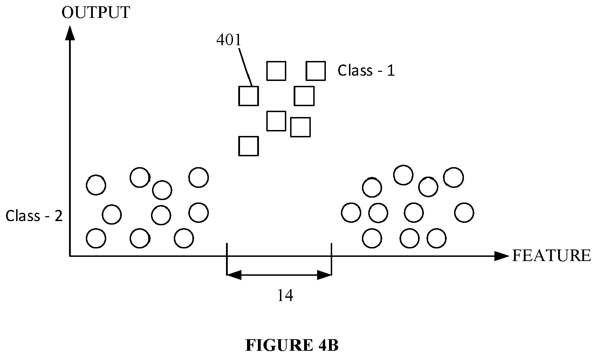

In an embodiment, the one or more constraints may include the monotonicity constraint. The monotonicity constraint is indicative of the increasing trend or the decreasing trend between an input to the model (101A) and an output of the model (101A). For example, the increasing trend indicates that the output of the model (101A) (i.e. OUTPUT) increases with the increase in the value (denoted by data points with "circle and rhombus shape") taken by one or more input variables (i.e. FEATURE) as shown in **FIGURE 4A(i)** for a regression model and in **FIGURE 4A(ii)** for a classification model. The thin-boundary constraint is indicative of the range of values in the input to the model (101A) for an expected output from the model (101A). For example, when a value of the one or more input variables (i.e. FEATURE) is in the range of 14, then the expected output (i.e. Y) belongs to Class 1 denoted by "square" shaped data points and when a value of the FEATURE is outside the range of 14, then the expected output (i.e. OUTPUT) is Class 2 denoted by "circle" shaped data points, for the thin-boundary constraint as shown in **FIGURE 4B**.

In an embodiment, the one or more threshold values includes at least one of the probability of occurrence associated with the one or more rules, the accuracy associated with the model (101A), and the predefined compliance score. The probability of occurrence is indicative of usage of the one or more rules by the model (101A) to predict the output for a given input. The accuracy is indicative of the success rate of predicting a correct output. The predefined compliance score is indicative of the expected aggregated score from the user for using the model (101A) to perform the one or more actions.

In an embodiment, the one or more rules and the one or more domain constraints include the relationship between one or more input variables associated with the model (101A) and one or more range of values or the output of the model (101A). The computing system (100) receives from the user, the one or more threshold values and the one or more domain constraints. Further, the one or more rules is received from the user or the computing system (100) extracts the one or more rules from the model (101A). In an embodiment, extracting the one or more rules from the model (101A) is based on at least one of a decision tree technique, and a local interpretable model-agnostic explanations technique. The person skilled in the art appreciates the use of other techniques to extract the one or more rules from the model (101A).

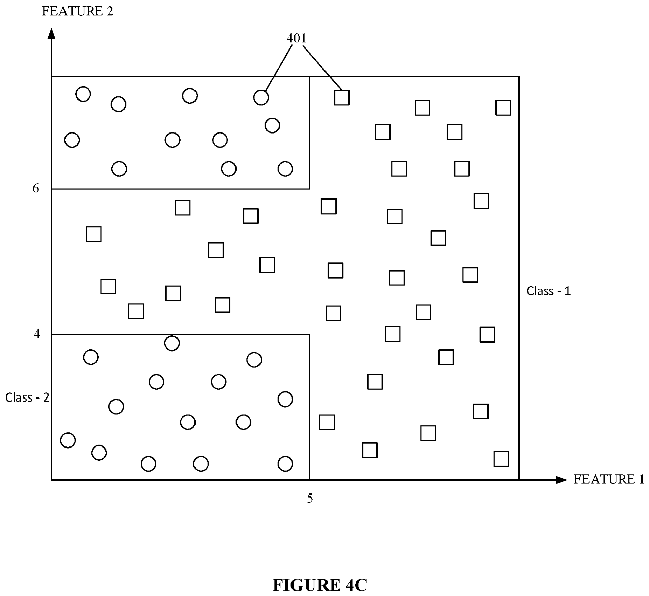

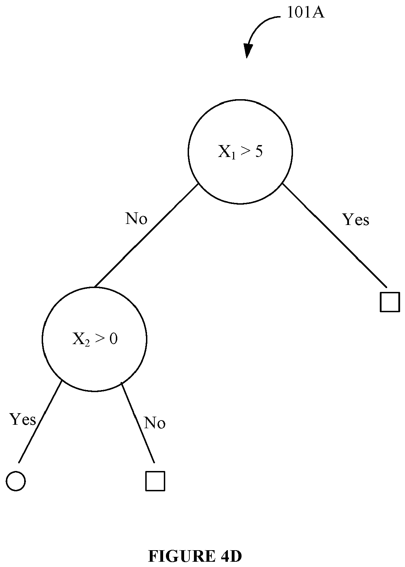

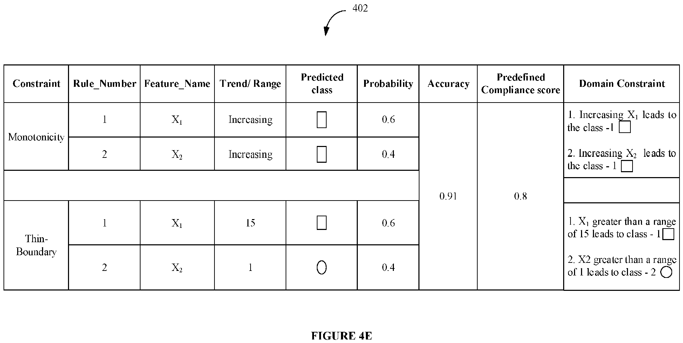

For example, consider the model (101A) trained with a dataset shown in **FIGURE 4C.** The dataset denotes a plurality of data points including a "square" shape and a "circle" shape. The data points denoted by the "square" shape belong to "Class 1" and the datapoints denoted by the "circle" shape belong to "Class 2". Further, let the model (101A) trained by the dataset be a decision tree technique. The one or more rules learned by the model (101A) (i.e. decision tree technique) are shown in **FIGURE 4D**. Furthermore, the one or more threshold values, the one or more rules and the one or more domain constraints for each of the one or more constraints obtained by the computing system (100) are shown in table-1 (402) of **FIGURE 4E.**

Referring back to **FIGURE 3**, at the operation 302, for each of the one or more constraints, the computing system (100), compares the one or more rules with the one or more domain constraints.

In an embodiment, when the one or more constraints is the monotonicity constraint the computing system (100), verifies a variation including at least one of the decreasing trend and the increasing trend, of one or more input variables in each of the one or more rules with a corresponding variation in each of the one or more domain constraints. For example, consider the one or more rules and the one or more domain constraints shown in table-1 (402) of FIGURE **4E** corresponding to the monotonicity constraint. The computing system (100) verifies the "Rule -1" i.e. "if the one or more input variables (FEATURE 1) increases the model (101A) predicts the "Class - 1" (denoted by "square" shape) with a first domain constraint i.e. "Increasing $X_1$ leads to Class - 1 denoted by "square" shape". Similarly, the computing system (100) verifies each of the one or more rules to the monotonicity constraint obtained from the model (101A) with the one or more domain constraints.

In an embodiment, when the one or more constraints is the thin-boundary constraint the computing system (100), verifies the variation including one or more range of values for one or more input variables in each of the one or more rules with corresponding variation in each of the one or more domain constraints. For example, consider the one or more rules and the one or more domain constraints shown in table-1 (402) of FIGURE **4E** corresponding to the thin-boundary constraint. The range value "15" in rule no 1 for Thin-boundary constraint indicates a range of values .i.e. if FEATURE 1<=25 & FEATURE 1>=6 denoting class 1 then it is compliant with thin boundary constraint. However, if FEATURE 1<=10 and FEATURE 1>=7 leading to class 1 then it violates thin boundary constraint as per **FIGURE 4E** (first constraint of thin boundary).

Referring back to **FIGURE 3**, at the operation 303, the computing system (100), determines a score associated with each of the one or more rules based on result of the comparison.

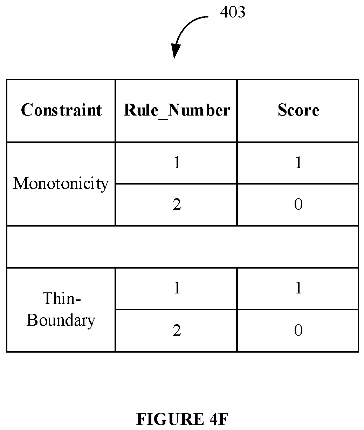

In an embodiment, determining the score includes associating a binary value for each of the one or more rules based on the result of the comparison. The binary value of 1 is associated to the each of the one or more rules when the one or more rules is compliant to the one or more domain constraints and the binary value of 0 is associated to the each of the one or more rules when the one or more rules is not compliant to the one or more domain constraints. For example, the one or more rules and the one or more domain constraints for the monotonicity and the thin-boundary constraint respectively is shown in table-1 (402) of **FIGURE 4E**, a score determined by the computing by verifying the one or more rules and the one or more domain constraints is shown in **FIGURE 4F**.

Referring back to **FIGURE 3**, at the operation 304, the computing system (100), determines an aggregated score based on the score associated with each of the one or more rules.

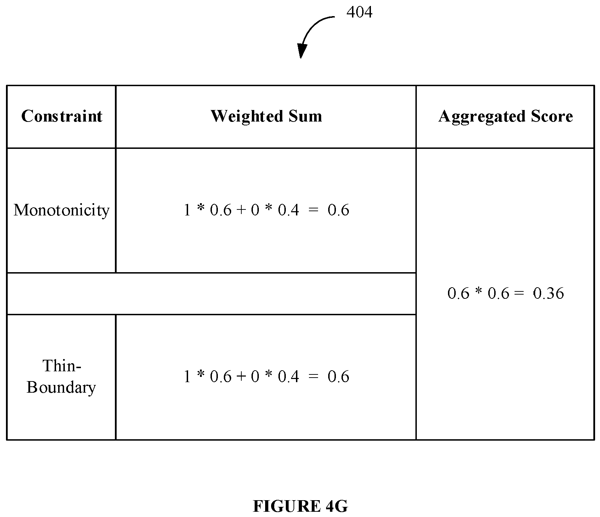

In an embodiment, determining the aggregated score includes computing the weighted sum for each constraint based on the determined score and the probability of occurrence associated with each of the one or more rules using the equation (1) as shown in **FIGURE 4G**. For example, the monotonicity constraint has the weighted sum equal to "0.75" and the thin-boundary constraint has the weighted sum equal to "0.6". Further, computing the product of the weighted sum associated with the one or more constraints using the equation (2) for determining the aggregated score as shown in **FIGURE 4G**. For example, the aggregated score corresponding to the model (101A) shown in **FIGURE 4D** is "0.45" as shown in **FIGURE 4G**. The aggregates score denotes the compliance score of the model (101A). The aggregated score with a larger value indicates the model (101A) is more compliant with the one or more constraints and the aggregated score with smaller value indicates the model (101A) is less compliant with the one or more constraints.

Referring back to **FIGURE 3**, at the operation 305, the computing system (100), evaluates the compliance of the model (101A) to a domain based on the aggregated score and the one or more threshold values.

In an embodiment, evaluating the compliance of the model (101A) includes comparing the aggregated score with the predefined compliance score, when an accuracy associated with the model (101A) is greater than or equal to a predefined accuracy threshold. If the aggregated score of the model (101A) is greater than the predefined compliance score, the model (101A) is accepted to be domain compliant. On the contrary, if the aggregated score of the model (101A) is lesser than the predefined compliance score, the model (101A) is rejected and the model (101A) is not domain compliant. For example, the aggregated score (i.e. 0.45) of the model (101A) shown in **FIGURE 4G,** is compared with the predefined compliance score of "0.8" shown in **FIGURE 4E**, since the aggregated score is lesser than the predefined compliance score the model (101A) shown in **FIGURE 4G** is rejected.

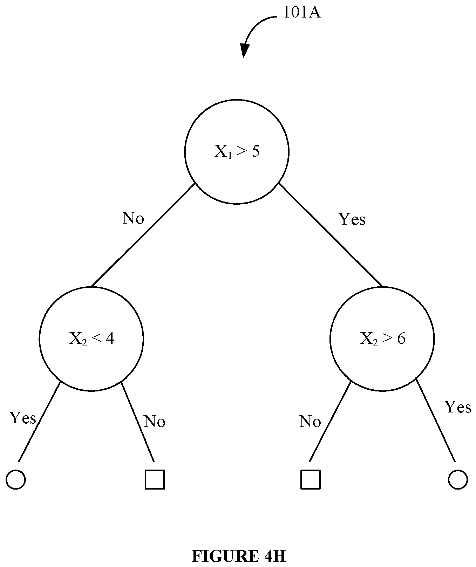

For example, if the model (101A) trained using the dataset shown in **FIGURE 4C** results in a decision tree shown in **FIGURE 4H** having the aggregated score of "0.82", then the model (101A) shown in **FIGURE 4H** is accepted to be domain compliant because the aggregated score is greater than the predefined compliance score.

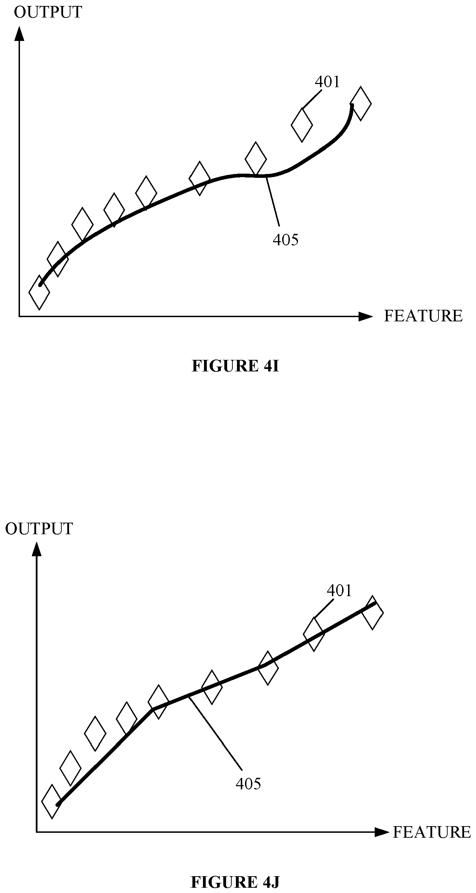

In a first example, when the model (101A) is trained with the data points shown in **FIGURE 4A** and the model (101A) learns a curve (405) shown in **FIGURE 4I**, then the model (101A) does not satisfy the monotonicity constraint and the model (101A) is not domain compliant. In a second example, when the model (101A) is trained with the data points shown in **FIGURE 4A** and the model (101A) learns the curve (405) shown in **FIGURE 4J**, then the model (101A) satisfies the monotonicity constraint and the model (101A) is domain compliant.

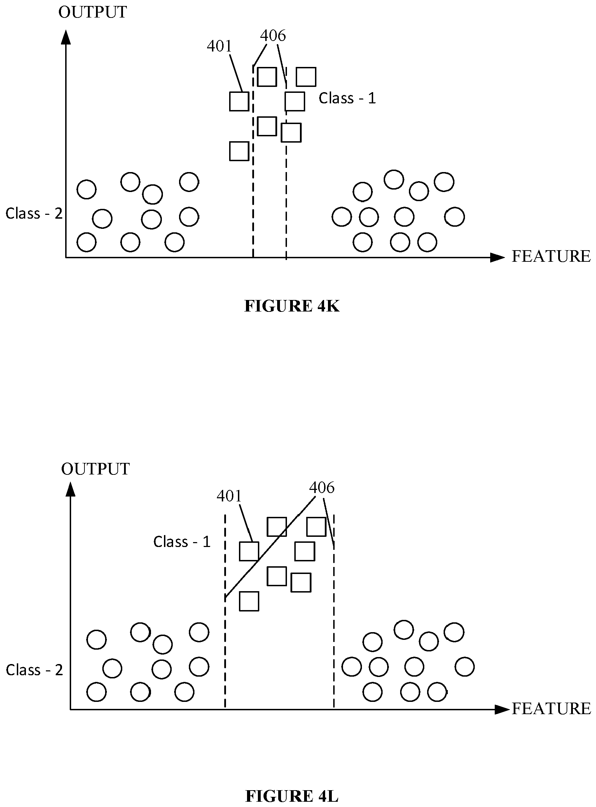

In a third example, when the model (101A) is trained with the data points shown in **FIGURE 4B** and the model (101A) learns decision boundaries (406) denoted by the dotted lines shown in **FIGURE 4K**, then the model (101A) does not satisfy the thin-boundary constraint and the model (101A) is not domain compliant. In a second example, when the model (101A) is trained with the data points shown in **FIGURE 4B** and the model (101A) learns the curve (405) shown in **FIGURE 4L**, then the model (101A) satisfies the thin-boundary constraint and the model (101A) is domain compliant.

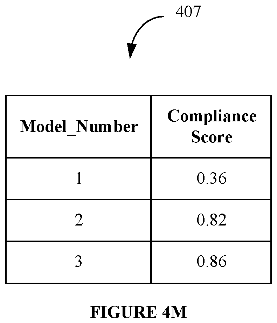

In an embodiment, after evaluating the compliance of the model (101A), the compliance of a plurality of models (101A, 101B, ... 101N) is evaluated and a domain complaint model (101A) having a maximum compliance score among the plurality of models (101A, 101B, ... 101N) is identified. For example, consider the plurality of models (101A, 101B, ... 101N) and the associated compliance score shown in table -2 (407) of **FIGURE 4M**, the model (101A) having the highest compliance score of "0.86" is identified as the domain compliant model (102).

In an embodiment, the method of evaluating the compliance of the model (101A) includes determining the aggregated score for each of the one or more constraints. Further, based on the aggregated score evaluating the model (101A) for domain compliance. The evaluation for the domain compliant model (102) provides early detection of errors, for example, overfitting in the model (101A) occurred during the training of the model (101A). Further, evaluating the model (101A) for compliance eliminates the need for the user and manual verification process which may be prone to errors, for example, the user may not verify all constraints among the one or more constraints. The evaluation of the model (101A) provides insights regarding the learning mechanism of the model (101A) and helps the user to train the model (101A) for providing accurate results.

COMPUTER SYSTEM

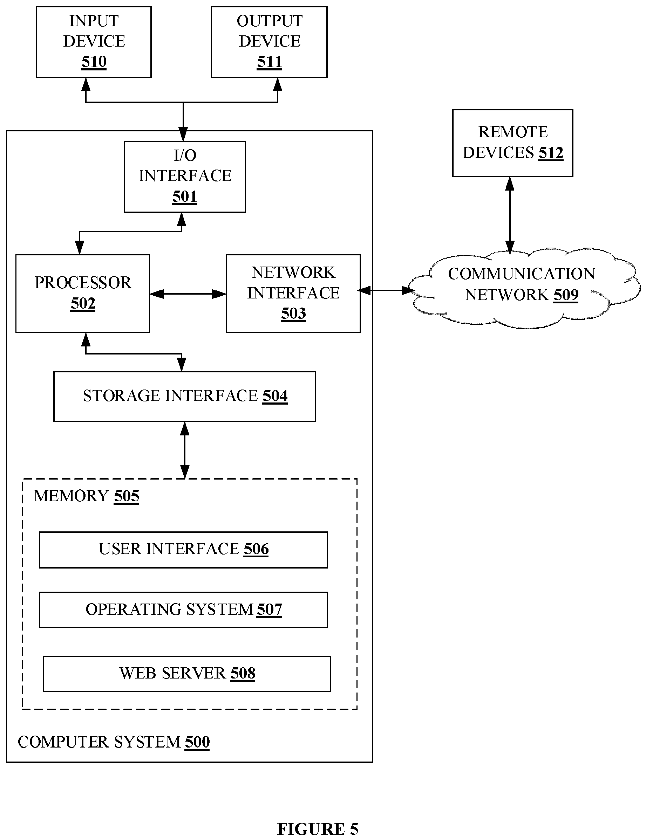

**FIGURE 5** illustrates a block diagram of an exemplary computer system (500) for implementing embodiments consistent with the present disclosure. In an embodiment, the computer system (500) may be used to implement the method for evaluating the compliance of the model (101A). The computer system (500) may comprise a central processing unit ("CPU" or "processor") (502). The processor (502) may comprise at least one data processor for executing program components for evaluating the compliance of the model (101A). The processor (502) may include specialized processing units such as integrated system (bus) controllers, memory management control units, floating point units, graphics processing units, digital signal processing units, etc.

The processor (502) may be disposed in communication with one or more input/output (I/O) devices (not shown) via I/O interface (501). The I/O interface (501) may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface (501), the computer system (500) may communicate with one or more I/O devices. For example, the input device (510) may be an antenna, keyboard, mouse, joystick, (infrared) remote control, camera, card reader, fax machine, dongle, biometric reader, microphone, touch screen, touchpad, trackball, stylus, scanner, storage device, transceiver, video device/source, etc. The output device (511) may be a printer, fax machine, video display (e.g., cathode ray tube (CRT), liquid crystal display (LCD), light-emitting diode (LED), plasma, Plasma display panel (PDP), Organic light-emitting diode display (OLED) or the like), audio speaker, etc.

In some embodiments, the computer system (500) is connected to the service operator through a communication network (509). The processor (502) may be disposed in communication with the communication network (509) via a network interface (503). The network interface (503) may communicate with the communication network (509). The network interface (503) may employ connection protocols including, without limitation, direct connect, Ethernet (e.g., twisted pair 10/100/1000 Base T), transmission control protocol/Internet protocol (TCP/IP), token ring, IEEE 802.11a/b/g/n/x, etc. The communication network (509) may include, without limitation, a direct interconnection, e-commerce network, a peer to peer (P2P) network, local area network (LAN), wide area network (WAN), wireless network (e.g., using Wireless Application Protocol), the Internet, Wi-Fi, etc. Using the network interface (503) and the communication network (509), the computer system (500) may communicate with the one or more service operators.

In some embodiments, the processor (502) may be disposed in communication with a memory (505) (e.g., RAM, ROM, etc. not shown in Figure 5 via a storage interface (504). The storage interface (504) may connect to memory (505) including, without limitation, memory drives, removable disc drives, etc., employing connection protocols such as serial advanced technology attachment (SATA), Integrated Drive Electronics (IDE), IEEE-1394, Universal Serial Bus (USB), fiber channel, Small Computer Systems Interface (SCSI), etc. The memory drives may further include a drum, magnetic disc drive, magneto-optical drive, optical drive, Redundant Array of Independent Discs (RAID), solid-state memory devices, solid-state drives, etc.

The memory (505) may store a collection of program or database components, including, without limitation, user interface (506), an operating system (507), web server (508) etc. In some embodiments, computer system (500) may store user/application data (506), such as the data, variables, records, etc. as described in this disclosure. Such databases may be implemented as fault-tolerant, relational, scalable, secure databases such as Oracle or Sybase.

The operating system (507) may facilitate resource management and operation of the computer system (500). Examples of operating systems include, without limitation, APPLE® MACINTOSH® OS X®, UNIX®, UNIX-like system distributions (E.G., BERKELEY SOFTWARE DISTRIBUTION® (BSD), FREEBSD®, NETBSD®, OPENBSD, etc.), LINUX® DISTRIBUTIONS (E.G., RED HAT®, UBUNTU®, KUBUNTU®, etc.), IBM®OS/2®, MICROSOFT® WINDOWS® (XP®, VISTA®/7/8, 10 etc.), APPLE® IOS®, GOOGLE™ ANDROID™, BLACKBERRY® OS, or the like.

In some embodiments, the computer system (500) may implement a web browser stored program component. The web browser may be a hypertext viewing application, such as MICROSOFT® INTERNET EXPLORER®, GOOGLE™ CHROME™, MOZILLA® FIREFOX®, APPLE® SAFARI®, etc. Secure web browsing may be provided using Secure Hypertext Transport Protocol (HTTPS), Secure Sockets Layer (SSL), Transport Layer Security (TLS), etc. Web browsers may utilize facilities such as AJAX, HTML, ADOBE® FLASH®, JAVASCRIPT® JAVA®, Application Programming Interfaces (APIs), etc. In some embodiments, the computer system (500) may implement a mail server (not shown in figure) stored program component. The mail server may be an Internet mail server such as Microsoft Exchange, or the like. The mail server may utilize facilities such as Active Server Pages (ASP), ACTIVEX®, ANSI® C++/C#, MICROSOFT®, NET, CGI SCRIPTS, JAVA®, JAVASCRIPT®, PERL®, PHP, PYTHON®, WEBOBJECTS®, etc. The mail server may utilize communication protocols such as Internet Message Access Protocol (IMAP), Messaging Application Programming Interface (MAPI), MICROSOFT®Exchange, Post Office Protocol (POP), Simple Mail Transfer Protocol (SMTP), or the like. In some embodiments, the computer system (500) may implement a mail client stored program component (not shown in figure). The mail client may be a mail viewing application, such as APPLE® MAIL, MICROSOFT® ENTOURAGE®, MICROSOFT® OUTLOOK®, MOZILLA® THUNDERBIRD®, etc.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processors to perform steps or stages consistent with the embodiments described herein. The term "computer-readable medium" should be understood to include tangible items and exclude carrier waves and transient signals, i.e., non-transitory. Examples include Random Access memory (RAM), Read-Only memory (ROM), volatile memory, non-volatile memory, hard drives, Compact Disc (CD) ROMs, Digital Video Disc (DVDs), flash drives, disks, and any other known physical storage media.

The one or more threshold values, the one or more rules and the one or more domain constraints may be received from the remote devices (512).

The terms "an embodiment", "embodiment", "embodiments", "the embodiment", "the embodiments", "one or more embodiments", "some embodiments", and "one embodiment" mean "one or more (but not all) embodiments of the invention(s)" unless expressly specified otherwise.

The terms "including", "comprising", "having" and variations thereof mean "including but not limited to", unless expressly specified otherwise.

The enumerated listing of items does not imply that any or all of the items are mutually exclusive, unless expressly specified otherwise. The terms "a", "an" and "the" mean "one or more", unless expressly specified otherwise.

A description of an embodiment with several components in communication with each other does not imply that all such components are required. On the contrary, a variety of optional components are described to illustrate the wide variety of possible embodiments of the invention.

When a single device or article is described herein, it may be readily apparent that more than one device/article (whether or not they cooperate) may be used in place of a single device/article. Similarly, where more than one device or article is described herein (whether or not they cooperate), it may be readily apparent that a single device/article may be used in place of the more than one device or article or a different number of devices/articles may be used instead of the shown number of devices or programs. The functionality and/or the features of a device may be alternatively embodied by one or more other devices which are not explicitly described as having such functionality/features. Thus, other embodiments of the invention need not include the device itself.

The illustrated operations of **FIGURE 3** shows certain events occurring in a certain order. In alternative embodiments, certain operations may be performed in a different order, modified or removed. Moreover, steps may be added to the above described logic and still conform to the described embodiments. Further, operations described herein may occur sequentially or certain operations may be processed in parallel. Yet further, operations may be performed by a single processing unit or by distributed processing units.

Finally, the language used in the specification has been principally selected for readability and instructional purposes, and it may not have been selected to delineate or circumscribe the inventive subject matter. It is therefore intended that the scope of the invention be limited not by this detailed description, but rather by any claims that issue on an application based here on. Accordingly, the disclosure of the embodiments of the invention is intended to be illustrative, but not limiting, of the scope of the invention, which is set forth in the following claims.

While various aspects and embodiments have been disclosed herein, other aspects and embodiments may be apparent to those skilled in the art. The various aspects and embodiments disclosed herein are for purposes of illustration and are not intended to be limiting, with the true scope being indicated by the following claims.

**REFERRAL NUMERALS:**

| Reference number | Description |
| --- | --- |
| 100 | Computing system |
| 101A, 101B, ... 101N | Plurality of models |
| 102 | Domain compliant model |
| 201 | I/O Interface |
| 202 | Memory |
| 203 | Processor |
| 204 | Data |
| 205 | Threshold data |
| 206 | Rule and domain constraints data |

(continued)

| Reference number | Description |
|---|---|
| 207 | Score data |
| 208 | Other data |
| 209 | Modules |
| 210 | Comparison module |
| 211 | Score generation module |
| 212 | Compliance module |
| 213 | Other module |
| 401 | Data Points |
| 402 | Table - 1 |
| 403 | Determined score |
| 404 | Determined aggregated score |
| 405 | Curve |
| 406 | Decision boundaries |
| 407 | Table - 2 |
| 500 | Computer System |
| 501 | I/O interface |
| 502 | Processor |
| 503 | Network Interface |
| 504 | Storage Interface |
| 505 | Memory |
| 506 | User Interface |
| 507 | Operating System |
| 508 | Web Server |
| 509 | Communication Network |
| 510 | Input Device |
| 511 | Output Device |
| 512 | Remote Devices |

Claims

1. A method of evaluating a model (101A) for compliance, the method comprises:

obtaining, by a computing system (100), one or more threshold values, one or more rules, and one or more domain constraints for each of one or more constraints associated with the model (101A), wherein the one or more constraints includes a thin-boundary constraint;
for each of the one or more constraints, comparing, by the computing system (100), the one or more rules with the one or more domain constraints;
determining, by the computing system (100), a score associated with each of the one or more rules based on result of the comparison;
determining, by the computing system (100), an aggregated score based on the score associated with each of the one or more rules; and
evaluating, by the computing system (100), the compliance of the model (101A) to a domain, based on the aggregated score and the one or more threshold values.

2. The method as claimed in claim 1, wherein the one or more threshold values comprises at least one of a probability of occurrence associated with the one or more rules, an accuracy associated with the model (101A), and a predefined compliance score.

3. The method as claimed in claim 1, wherein the one or more rules and the one or more domain constraints comprises a relationship between one or more input variables associated with the model (101A) and one or more range of values.

4. The method as claimed in claim 1, wherein obtaining the one or more threshold values and the one or more domain constraints comprises receiving from a user, the one or more threshold values and the one or more domain constraints.

5. The method as claimed in claim 1, wherein obtaining the one or more rules comprises one of receiving from a user, the one or more rules or extracting by the computing system (100), the one or more rules.

6. The method as claimed in claim 1, wherein comparing the one or more rules with the one or more domain constraints, when the one or more constraints is a monotonicity constraint comprises:
verifying a variation comprising at least one of a decreasing trend and an increasing trend, of one or more input variables in each of the one or more rules with a corresponding variation in each of the one or more domain constraints.

7. The method as claimed in claim 1, wherein comparing the one or more rules with the one or more domain constraints, when the one or more constraints is the thin-boundary constraint comprises;
verifying a variation comprising one or more range of values for one or more input variables in each of the one or more rules with corresponding variation in each of the one or more domain constraints.

8. The method as claimed in claim 1, wherein determining the score comprises associating a binary value for each of the one or more rules based on the result of the comparison.

9. The method as claimed in claim 1, wherein determining the aggregated score comprises:

   for each constraint, computing a weighted sum based on the determined score and a probability of occurrence associated with each of the one or more rules; and
   computing a product of the weighted sum associated with the one or more constraints.

10. The method as claimed in claim 1, wherein evaluating the compliance of the model (101A) comprises:
comparing the aggregated score with a predefined compliance score, when an accuracy associated with the model (101A) is greater than or equal to a predefined accuracy threshold.

11. The method as claimed in claim 1, after evaluating the compliance of the model (101A), the compliance of a plurality of models (101A, 101B, ... 101N) is evaluated and a domain complaint model (101A) having a maximum compliance score among the plurality of models (101A, 101B, ... 101N) is identified.

12. A computing system (100), for evaluating a model (101A) for compliance, the computing system (100) comprises:

   a processor (203); and
   a memory (202) communicatively coupled to the processor (203), wherein the memory (202) stores the processor (203) instructions, which, on execution, causes the processor (203) to:

      obtain one or more threshold values, one or more rules, and one or more domain constraints for each of one or more constraints associated with the model (101A), wherein the one or more constraints includes a thin-boundary constraint;
      for each of the one or more constraints, compare the one or more rules with the one or more domain constraints;
      determine a score associated with each of the one or more rules based on result of the comparison;
      determine an aggregated score based on the score associated with each of the one or more rules; and
      evaluate the compliance of the model (101A) to a domain based on the aggregated score and the one or more threshold values.

13. The computing system (100) as claimed in claim 12, wherein the processor (203) is configured to obtain the one or more threshold values and the one or more domain constraints comprises receiving from a user, the one or more threshold values and the one or more domain constraints.

14. The computing system (100) as claimed in claim 12, wherein the processor (203) is configured to obtain the one or more rules comprises one of receiving from a user, the one or more rules or extracting by the computing system (100), the one or more rules.

15. The computing system (100) as claimed in claim 12, wherein the processor (203) is configured to compare the one or more rules with the one or more domain constraints, when the one or more constraints is a monotonicity constraint comprises:
verifying a variation comprising at least one of a decreasing trend and an increasing trend, of one or more input variables in each of the one or more rules with a corresponding variation in each of the one or more domain constraints.

16. The computing system (100) as claimed in claim 12, wherein the processor (203) is configured to compare the one or more rules with the one or more domain constraints, when the one or more constraints is the thin-boundary constraint comprises:
verifying a variation comprising one or more range of values for one or more input variables in each of the one or more rules with a variation in each of the one or more domain constraints.

17. The computing system (100) as claimed in claim 12, wherein the processor (203) is configured to determine the score comprises associating a binary value for each of the one or more rules based on the result of the comparison.

18. The computing system (100) as claimed in claim 12, wherein the processor (203) is configured to determine the aggregated score comprises:

for each constraint, computing a weighted sum based on the determined score and a probability of occurrence associated with each of the one or more rules; and
computing a product of the weighted sum associated with the one or more constraints.

19. The computing system (100) as claimed in claim 12, wherein the processor (203) is configured to evaluate the compliance of the model (101A) comprises:
comparing the aggregated score with a predefined compliance score, when an accuracy associated with the model (101A) is greater than or equal to a predefined accuracy threshold.

20. The computing system (100) as claimed in claim 12, after evaluating the compliance of the model (101A), the processor (203) is configured to evaluate the compliance of a plurality of models (101A, 101B, ... 101N) and identify a domain complaint model having a maximum compliance score among the plurality of models (101A, 101B, ... 101N).

MODEL – A   **101A**

MODEL – B   **101B**

MODEL – N   **101N**

COMPUTING SYSTEM
**100**

DOMAIN COMPLIANT
MODEL **102**

**FIGURE 1**

A COMPUTING SYSTEM **100**

| I/O INTERFACE **201** | MEMORY **202** | PROCESSOR **203** |

DATA 2**04**

| THRESHOLD DATA **205** | RULE AND DOMAIN CONSTRAINTS DATA **206** |
| SCORE DATA **207** | OTHER DATA **208** |

MODULES **209**

| COMPARISON MODULE **210** | SCORE GENERATION MODULE **211** |
| COMPLIANCE MODULE **212** | OTHER MODULE **213** |

**FIGURE 2**

_300_

OBTAIN ONE OR MORE THRESHOLD VALUES, ONE OR MORE RULES, AND ONE OR MORE DOMAIN CONSTRAINTS _301_

COMPARE THE ONE OR MORE RULES WITH THE ONE OR MORE DOMAIN CONSTRAINTS _302_

DETERMINE A SCORE ASSOCIATED WITH EACH OF THE ONE OR MORE RULES _303_

DETERMINE AN AGGREGATED SCORE _304_

EVALUATE THE COMPLIANCE OF THE MODEL TO A DOMAIN _305_

**FIGURE 3**

FIGURE 4A

**FIGURE 4B**

**FIGURE 4C**

101A

$X_1 > 5$

No

Yes

$X_2 > 0$

Yes

No

**FIGURE 4D**

402

| Constraint | Rule_Number | Feature_Name | Trend/ Range | Predicted class | Probability | Accuracy | Predefined Compliance score | Domain Constraint |
|---|---|---|---|---|---|---|---|---|
| Monotonicity | 1 | $X_1$ | Increasing | ☐ | 0.6 | | | 1. Increasing $X_1$ leads to the class -1 ☐ |
| | 2 | $X_2$ | Increasing | ☐ | 0.4 | | | 2. Increasing $X_2$ leads to the class - 1 ☐ |
| | | | | | | 0.91 | 0.8 | |
| Thin-Boundary | 1 | $X_1$ | 15 | ☐ | 0.6 | | | 1. $X_1$ greater than a range of 15 leads to class - 1 ☐ |
| | 2 | $X_2$ | 1 | ◯ | 0.4 | | | 2. X2 greater than a range of 1 leads to class - 2 ◯ |

FIGURE 4E

403

| Constraint | Rule_Number | Score |
|:---:|:---:|:---:|
| Monotonicity | 1 | 1 |
| | 2 | 0 |
| | | |
| Thin-Boundary | 1 | 1 |
| | 2 | 0 |

**FIGURE 4F**

404

| Constraint | Weighted Sum | Aggregated Score |
|---|---|---|
| Monotonicity | 1 * 0.6 + 0 * 0.4 = 0.6 | 0.6 * 0.6 = 0.36 |
| | | |
| Thin-Boundary | 1 * 0.6 + 0 * 0.4 = 0.6 | |

**FIGURE 4G**

101A

$X_1 > 5$

No                    Yes

$X_2 < 4$              $X_2 > 6$

Yes        No      No        Yes

**FIGURE 4H**

**FIGURE 4I**

**FIGURE 4J**

OUTPUT

401    406

Class - 1

Class - 2

FEATURE

**FIGURE 4K**

OUTPUT

401    406

Class - 1

Class - 2

FEATURE

**FIGURE 4L**

407

| Model_Number | Compliance Score |
|:---:|:---:|
| 1 | 0.36 |
| 2 | 0.82 |
| 3 | 0.86 |

**FIGURE 4M**

**FIGURE 5**

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 603 358 B1 (ANDERSON RANDALL MARVIN [US] ET AL) 13 October 2009 (2009-10-13) * abstract * * column 1 - column 4 * | 1-20 | INV. G06Q10/06 G06Q10/10 |
| X | Tom Butler ET AL: "Artificial intelligence for regulatory compliance: Are we there yet?", Journal of Financial Compliance, 1 September 2019 (2019-09-01), pages 44-59, XP055725297, Retrieved from the Internet: URL:https://e9a5d5c6.stackpathcdn.com/wp-content/uploads/2019/02/Artificial-Intelligence-and-Regulatory-Compliance-Working-Paper.pdf [retrieved on 2020-08-26] * page 8 - page 11 * * abstract * | 1-20 | |
| X,D | WO 2018/084867 A1 (EQUIFAX INC [US]) 11 May 2018 (2018-05-11) * abstract * * page 1 - page 4 * | 1-20 | TECHNICAL FIELDS SEARCHED (IPC) G06Q |
| X,D | US 2016/364511 A1 (KIRSHNER SERGEY [US]) 15 December 2016 (2016-12-15) * abstract * * page 1 - page 5 * | 1-20 | |

The present search report has been drawn up for all claims

| Place of search | Date of completion of the search | Examiner |
|---|---|---|
| Munich | 26 August 2020 | Härdeman, David |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 20 16 7903

This annex lists the patent family members relating to the patent documents cited in the above-mentioned European search report.
The members are as contained in the European Patent Office EDP file on
The European Patent Office is in no way liable for these particulars which are merely given for the purpose of information.

26-08-2020

| Patent document cited in search report | | Publication date | Patent family member(s) | | Publication date |
|---|---|---|---|---|---|
| US 7603358 | B1 | 13-10-2009 | CA | 2627270 A1 | 26-04-2007 |
| | | | JP | 5253172 B2 | 31-07-2013 |
| | | | JP | 2009512947 A | 26-03-2009 |
| | | | US | 7603358 B1 | 13-10-2009 |
| | | | US | 2010030718 A1 | 04-02-2010 |
| | | | US | 2012136806 A1 | 31-05-2012 |
| | | | WO | 2007047900 A2 | 26-04-2007 |
| WO 2018084867 | A1 | 11-05-2018 | AU | 2016428862 A1 | 27-06-2019 |
| | | | AU | 2020210239 A1 | 20-08-2020 |
| | | | CA | 3039182 A1 | 11-05-2018 |
| | | | EP | 3535697 A1 | 11-09-2019 |
| | | | US | 2019340526 A1 | 07-11-2019 |
| | | | US | 2020104734 A1 | 02-04-2020 |
| | | | WO | 2018084867 A1 | 11-05-2018 |
| US 2016364511 | A1 | 15-12-2016 | US | 2016364511 A1 | 15-12-2016 |
| | | | WO | 2016201143 A1 | 15-12-2016 |

EPO FORM P0459

For more details about this annex : see Official Journal of the European Patent Office, No. 12/82

**EP 3 889 858 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2018084867 A1
- US 20160364511 A1